(19) Europäisches Patentamt / European Patent Office / Office européen des brevets

(11) **EP 2 407 563 A1**

(12) **DEMANDE DE BREVET EUROPEEN**

(43) Date de publication:
**18.01.2012 Bulletin 2012/03**

(51) Int Cl.:
*C21C 7/00* (2006.01)    *C21C 7/076* (2006.01)
*B22D 11/111* (2006.01)    *C04B 18/06* (2006.01)

(21) Numéro de dépôt: **10290387.9**

(22) Date de dépôt: **13.07.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(71) Demandeur: **Denain Anzin Métallurgie D.A.MET
80100 Abbeville Cedex (FR)**

(72) Inventeurs:
• **Bonningue, Marie-Christine
80132 Port le Grand (FR)**
• **Tavernier, Hervé
80100 Abbeville (FR)**

(74) Mandataire: **Lecomte, Didier
Lecomte & Partners Sàrl
P.O. Box 1623
1016 Luxembourg (LU)**

(54) **Poudre de couverture pour acier liquide et son procédé de fabrication**

(57) L'invention concerne une poudre de couverture pour répartiteur acier liquide caractérisée en ce que sa composition chimique, outre les inévitables impuretés résiduelles venant de son élaboration, répond au moins à l'analyse suivante, donnée en teneurs pondérales : de 15 à 30 % de $SiO_2$, de 10 à 25 % de $Al_2O_3$, jusqu'à 3% de $Fe_2O_3$, de 30 à 50 % de CaO totale, moins de 5 % de MgO, moins de 3 % de C, et en ce qu'elle présente en outre un indice de basicité compris entre 0,6 et 1,3, ledit indice de basicité étant défini comme le rapport des teneurs pondérales :

$$\frac{CaO + MgO}{SiO_2 + Al_2O_3}$$

L'invention concerne également le procédé de fabrication d'une telle poudre de couverture à partir de cendre de bois.

Printed by Jouve, 75001 PARIS (FR)

## Description

L'invention concerne un laitier de couverture pour poche ou répartiteur et le procédé de fabrication d'un tel laitier.

Lors de son élaboration, l'acier sous forme liquide est versé dans des contenants tels que la poche et/ou le répartiteur, pour des durées allant de quelques minutes à plusieurs heures. Généralement, l'acier liquide est recouvert d'une poudre appelée laitier d'aciérie ou encore poudre de couverture, afin d'être protégé de l'atmosphère. Cette couverture a plusieurs fonctions. En premier lieu elle permet de limiter les pertes thermiques de l'acier par rayonnement et doit donc présenter à cet effet de bonnes propriétés d'isolation thermique. Ensuite, elle permet de réduire les échanges chimiques entre l'acier et l'atmosphère. Par exemple, elle doit permettre de réduire la reprise en oxygène et/ou en azote de l'acier. A cet effet, elle doit présenter une température de fusion qui ne soit pas trop basse afin de ne pas se liquéfier en totalité au contact de l'acier liquide et pouvoir former une couche solide. Enfin, elle doit être capable par sa composition de capter les inclusions non-métalliques présentes dans l'acier.

L'emploi de la cendre de balle de riz en tant que matière première principale pour la réalisation de laitiers de couverture est connu depuis longtemps et est décrite par exemple dans le document FR2348261. Mais cet emploi présente un danger pour la santé du personnel qui va manipuler le laitier du fait de la présence de silice cristalline dans la composition chimique de la cendre. Le taux de silice cristalline peut être important, par exemple il peut être supérieur à 15 %. Aussi il existe un besoin concernant la création de laitier permettant de limiter les risques pour la santé du personnel et d'améliorer les conditions de travail tout en conservant un laitier avec des qualités équivalentes.

Il est également connu, par exemple par le document US6174347 de recycler les laitiers pour obtenir une poudre de couverture présentant la composition suivante : environ 35 à 65 % de CaO, environ 10 à 35 % d'$Al_2O_3$, environ 1 à 10 % de $SiO_2$, environ 3 à 15 % de MgO, environ 0,3 à 10 % de FeO, environ 0,1 à 5 % de MnO, environ 0,10 à 0,15 % de $P_2O_5$ et environ 0,1 à 0,5 % de S, avec pour objectif de diminuer la teneur en carbone et en dioxyde de silicium des poudres ainsi obtenues en vue d'éviter une recarburation de l'acier ou une oxydation des éléments alliages présents dans l'acier. Néanmoins, on comprendra aisément que le recyclage d'un laitier ne change en rien la structure cristalline de la silice qu'il contient.

L'invention a pour objectif de procurer aux aciéristes des poudres de couverture pour acier liquide, et par exemple pour répartiteur et poche de coulée continue d'acier, offrant de bonnes caractéristiques d'isolation thermique et qui, de préférence, ne présentent pas de danger pour le personnel qui le manipule.

A cet effet l'invention a pour objet une poudre de couverture pour acier liquide, et par exemple pour répartiteur ou poche, utilisable lors de la coulée continue de l'acier, remarquable en ce que sa composition chimique, outre les inévitables impuretés résiduelles venant de son élaboration, répond au moins à l'analyse suivante, donnée en teneurs pondérales:

$$15\ \% \leq SiO_2 \leq 30\ \%$$

$$10\ \% \leq Al_2O_3 \leq 25\ \%$$

$$Fe_2O_3 \leq 3\ \%$$

$$30\ \% \leq CaO\ totale \leq 50\ \%$$

$$MgO < 5\ \%$$

$$C < 3\ \%$$

et en ce qu'elle présente en outre un indice de basicité compris entre 0,6 et 1,3, ledit indice de basicité étant défini comme le rapport des teneurs pondérales :

$$\frac{CaO + MgO}{SiO_2 + Al_2O_3}$$

Selon un mode de réalisation préféré de l'invention, la poudre de couverture est élaborée à base de cendre de bois.

Eventuellement, elle présente un indice de basicité compris entre 0,8 et 1,2, et de préférence entre 0,9 et 1,1.

De manière optionnelle, elle présente une teneur en carbone inférieure à 2 % et/ou une teneur en oxyde de magnésium MgO inférieure à 3 % et de préférence inférieure ou égale à 2,5 %.

Selon une définition possible de l'invention, sa teneur en oxyde de fer $Fe_2O_3$ est inférieure ou égale à 1,5 %. Eventuellement, elle comprend en outre un ou plusieurs des éléments suivants dans les proportions telles que définies : $P_2O_5 \leq 2,5\ \%$ et/ou $K_2O < 1\ \%$ et/ou $Na_2O < 0,5\ \%$ et/ou $SO_3 < 0,5\ \%$ et/ou $TiO_2 < 1\ \%$. De préférence, la somme des teneurs en oxyde de fer $Fe_2O_3$, en dioxyde de titane $TiO_2$ et en pentoxyde de phosphore $P_2O_5$ est inférieure à 5 %.

L'invention concerne également un procédé de fabrication d'une poudre de couverture pour acier liquide, et par exemple pour la coulée continue de l'acier, remarquable en ce qu'il comprend les étapes suivantes :

- on mélange, en teneurs pondérales, de 5 à 20 % d'alumine $Al_2O_3$ à de la cendre de bois;
- on ajoute un liant organique ou minéral, de préférence dans une proportion de 0,5 à 5 %.

De préférence, le procédé de fabrication selon l'invention permet d'obtenir une poudre de couverture telle que définie plus avant.

De préférence, la proportion d'alumine mélangée à la cendre de bois est de 8 à 15 %, et de préférence 10 %.

Selon une mise en oeuvre préférée de l'invention, la composition chimique de la cendre de bois utilisée répond, outre les inévitables impuretés résiduelles venant de son élaboration, au moins à l'analyse suivante, donnée en teneur pondérale :

$$20\ \% \leq SiO_2 \leq 40\ \%$$

$$10\ \% \leq Al_2O_3 \leq 20\ \%$$

$$Fe_2O_3 \leq 3\ \%$$

$$25\ \% \leq CaO\ totale \leq 50\ \%$$

$$MgO \leq 6\ \%$$

$$C < 5\ \%$$

De préférence, la cendre de bois utilisée présente en outre une teneur en chaux CaO libre inférieure à 5 %.

De manière avantageuse, la proportion d'alumine ajoutée est choisie de sorte à ce que la poudre obtenue après mélange présente un indice de basicité compris entre 0,6 et 1,3 de préférence compris entre 0,8 et 1,2, et de préférence encore entre 0,9 et 1,1, ledit indice de basicité étant défini comme le rapport des teneurs pondérales :

$$\frac{CaO + MgO}{SiO_2 + Al_2O_3}$$

Eventuellement, le mélange obtenu est ensuite atomisé de manière à obtenir un produit final granulé et homogène.

L'invention concerne enfin l'utilisation de cendre de bois comme matière première pour l'élaboration d'une poudre de couverture pour acier liquide, et de préférence pour la coulée continue de l'acier.

On aura compris que le principe à la base de l'invention est l'utilisation de cendre de bois en tant que matière première pour l'élaboration d'une poudre de couverture pour la coulée continue de l'acier. Les inventeurs ont en effet pu déterminer que la cendre de bois ne contenait pas de silice cristalline, le principe de l'invention consiste donc à utiliser cette cendre comme base pour la fabrication d'un laitier d'aciérie en vue de diminuer les risques pour le personnel qui le manipule. L'invention consiste par ailleurs à optimiser les proportions respectives des éléments, de préférence des éléments majoritaires, basiques et acides de la composition de sorte à tendre vers l'équilibre afin d'obtenir un produit non corrosif pour les réfractaires et afin de limiter les interactions avec l'acier. Enfin, l'invention consiste en la conception d'un laitier d'aciérie présentant de bonnes qualités d'isolation thermique et apte à préserver une bonne propreté interne de l'acier.

L'invention sera bien comprise et d'autres aspects et avantages apparaîtront clairement au vu de la description qui suit donnée à titre d'exemple.

La cendre de bois utilisée dans le cadre de l'invention est un semi-produit issu de la co-combustion de bois, d'écorces et de déchets non-dangereux. Néanmoins l'homme du métier prendra soin à ce que la teneur en bois dans le matériau de départ soit d'au moins 95 %. La co-combustion se fait dans une chaudière à lit fluidisé bouillonnant produisant de la vapeur. Elle est entraînée dans les gaz de combustion, puis elle est captée dans les filtres à manches en amont de la cheminée. L'utilisation de la cendre de bois pour la réalisation d'une poudre de couverture est particulièrement avantageuse du fait de la nature de la silice qu'elle contient. En effet, de manière surprenante, la structure cristallographique de la cendre de bois montre une absence de silice (SiO2) cristalline telle que la cristobalite et tridymite. Une utilisation de cendre de bois permet donc de résoudre les problèmes de santé rencontrés avec l'emploi de la cendre de riz.

Selon l'invention la composition de la cendre de bois utilisable répond, outre les inévitables impuretés résiduelles venant de son élaboration, à l'analyse suivante donnée en teneur pondérale :

$$20\ \% \leq SiO_2 \leq 40\ \%$$

$$10\ \% \leq Al_2O_3 \leq 20\ \%$$

$$Fe_2O_3 \leq 3\ \%$$

$$25\ \% \leq CaO\ totale \leq 50\ \%$$

$$MgO \leq 6\ \%$$

$$C < 5\ \%$$

Eventuellement, elle comprend en outre un ou plusieurs des éléments suivants dans les proportions telles que définies : $P_2O_5 \leq 2,5\ \%$, $K_2O < 1\ \%$, $Na_2O < 0,5\ \%$, $SO_3 < 0,5\ \%$, $TiO_2 < 1\ \%$. De préférence, la somme des teneurs en oxyde de fer $Fe_2O_3$, en dioxyde de titane $TiO_2$ et en pentoxyde de phosphore $P_2O_5$ est inférieure à 5 %.

De préférence, la cendre de bois utilisée présente en outre une teneur en chaux libre (CaO libre) inférieure à 5 %. En effet, la chaux libre est hydrophile et a donc tendance à capter l'eau présente dans l'air. Or de manière connue, la présence d'eau dans la poudre de couverture peut générer des défauts dans l'acier. Avec une teneur en chaux libre inférieure à 5 %, la quantité d'eau risquant d'être incorporée est suffisamment faible pour ne pas être gênante.

Un exemple d'analyse d'une cendre de bois utilisable dans le cadre de l'invention est donné par le tableau suivant :

| Elément | Teneur pondérale |
|---|---|
| $SiO_2$ | 25 % |
| $Al_2O_3$ | 12,4 % |
| $Fe_2O_3$ | 2 % |
| CaO totale | 48,3 % |
| $P_2O_5$ | 1,4 % |
| MgO | 2,4 % |
| $K_2O$ | 0,5 % |
| $Na_2O$ | 0,5 % |
| C total | 0,6 % |
| $TiO_2$ | 0,7 % |
| $H_2O$ | 0,2 % |

(suite)

| Elément | Teneur pondérale |
|---|---|
| S | 0,5 % |

Dans l'exemple donné, la perte au feu a été de 6 %. La teneur en CaO totale comprend de manière connue les teneurs en CaO libre et non-libre. La cendre de bois présente un indice de basicité égal à 1,3. On rappelle au besoin que l'indice de basicité se calcule en divisant la proportion cumulée des éléments basiques majoritaires dans le mélange à savoir la chaux (CaO) et la magnésie (MgO) par les proportions cumulées des éléments acides majoritaires dans le mélange, à savoir la silice ($SiO_2$) et l'alumine ($Al_2O_3$). Autrement dit, l'indice de basicité est défini comme étant le rapport des teneurs pondérales :

$$\frac{CaO + MgO}{SiO_2 + Al_2O_3}$$

Un tel indice de basicité est compatible avec les propriétés recherchées dans le cadre de l'invention. En effet, il a été établi que l'indice de basicité devait présenter une valeur comprise entre 0,60 et 1,30. Néanmoins dans une mise en oeuvre préférée de l'invention, l'indice de basicité visé est supérieur à 0,80 et de préférence supérieur à 0,85 afin de garantir une faible réactivité vis-à-vis des réfractaires et de l'acier. Pour les mêmes raisons, l'indice de basicité doit être inférieur à 1,2. Selon un mode de réalisation avantageux de l'invention l'indice de basicité est compris entre 0,80 et 1,2 et de préférence entre 0,90 et 1,10.

Afin d'ajuster l'indice de basicité de la poudre de couverture ou laitier selon l'invention, il est possible d'y ajouter de l'alumine à la cendre de bois. En effet, la cendre de bois présente généralement un indice de basicité supérieur à 1 ce qui signifie qu'elle est basique. Afin de tendre vers un coefficient de basicité proche de 1 recherché par l'invention, il est donc opportun d'ajouter un élément acide.

Selon l'invention, l'homme du métier choisira préférentiellement un ajout d'alumine et non pas de silice. Ce choix est motivé d'une part par les propriétés d'isolation thermique connues de l'alumine mais également parce que la silice peut former des inclusions non-métalliques et risque donc de nuire à la propreté interne de l'acier lorsqu'elle se trouve proportions trop importantes.

Etant issu de la combustion de matières variables, la cendre de bois peut présenter une variation dans son analyse. Néanmoins, les inventeurs ont établi qu'un ajout d'alumine dans une proportion d'environ 10 % par rapport au poids final du laitier permet dans la majorité des cas d'obtenir un indice de basicité compatible avec les propriétés recherchées dans le cadre de l'invention.

De préférence, un liant est ajouté afin d'obtenir un produit exempt de poussières. Le liant peut être organique ou minéral. Les liants pouvant être utilisé dans le cadre de l'invention sont des liants classiques bien connus de l'homme du métier et ne seront donc pas décrits plus avant dans le présent mémoire.

Ainsi, selon le procédé de fabrication d'un laitier de l'invention, la cendre de bois sera mélangée avec de l'alumine et un liant dans les proportions pondérales suivantes:

- 87 % de Cendre
- 10 % d'Alumine
- 3 % de liant

Il est entendu que les proportions du mélange définies ci-dessus sont données à titre d'exemple et ne sauraient être limitatives quant à la portée de l'invention. D'une manière générale le procédé de préparation de la poudre de couverture selon l'invention consiste à mélanger à de la cendre de bois de 5 à 20 % en teneurs pondérales d'alumine, et éventuellement de 0,5 à 5 % d'un liant organique ou minéral. Avantageusement la proportion d'alumine mélangée à la cendre de bois est de 8 à 15 %, et de préférence 10 %. D'autres éléments peuvent être ajoutés à la cendre de bois en fonction de sa composition initiale et de la composition finale de la poudre de couverture visée. En effet, la poudre selon l'invention est un produit synthétique aux caractéristiques maîtrisées et ajustables à la demande.

La composition chimique de la poudre de couverture obtenue selon le procédé de l'invention, outre les inévitables impuretés résiduelles venant de son élaboration, répond au moins à l'analyse suivante, donnée en teneurs pondérales :

$$15 \% \leq SiO_2 \leq 30 \%$$

$$10 \% \leq Al_2O_3 \leq 25 \%$$

$$Fe_2O_3 \leq 3 \%$$

$$30 \% \leq CaO \text{ totale} \leq 50 \%$$

$$MgO \leq 5 \%$$

$$C < 3 \%$$

et présente en outre un indice de basicité compris entre 0,6 et 1,3. On rappelle une fois encore que l'indice de basicité selon l'invention est défini comme le rapport des teneurs pondérales :

$$\frac{CaO + MgO}{SiO_2 + Al_2O_3}$$

Selon un mode de réalisation préféré de l'invention, l'indice de basicité compris entre 0,8 et 1,2, et de préférence entre 0,9 et 1,1. En effet, un indice de basicité proche de 1 est recherché afin de limiter les échanges du laitier avec l'acier. Par ailleurs cette adaptation de la basicité de la poudre de couverture permet de limiter la corrosion des réfractaires présents dans la poche et/ou le répartiteur par contact avec la poudre de couverture et donc d'augmenter leur durée de vie.

De préférence la teneur en carbone du laitier selon l'invention est inférieure à 2 %. Une basse teneur en carbone permet en effet d'éviter une recarburation du métal liquide et est donc particulièrement avantageuse lors de la conception d'aciers bas carbone. Néanmoins, il est également possible, pour des applications spécifiques d'augmenter la teneur en carbone

Eventuellement, la poudre de couverture selon l'invention comprend en outre un ou plusieurs des éléments suivants dans les proportions telles que définies : $P_2O_5 \leq 2,5$ %, $K_2O < 1$ %, $Na_2O < 0,5$ %, $SO_3 < 0,5$ %, $TiO_2 < 1$ %. De préférence, la somme des teneurs en oxyde de fer $Fe_2O_3$, en dioxyde de titane $TiO_2$ et en pentoxyde de phosphore $P_2O_5$ est inférieure à 5 %. Les teneurs en dioxyde de titane et en pentoxyde de phosphore doivent en effet être maintenues basses en raison de leur nocivité à l'égard de la qualité finale recherchée pour l'acier, notamment en raison de leur propension à former des ségrégations dans l'acier. Le maintien d'une faible teneur de ses éléments dans la poudre de couverture permet d'éviter un enrichissement de l'acier en ces éléments.

La teneur en oxyde ferrique $Fe_2O_3$ doit être faible afin que la poudre de couverture présente une température de fusion suffisamment élevée pour former une couche solide sur la surface de l'acier liquide. En effet, une augmentation trop importante de la teneur en $Fe_2O_3$ aurait pour conséquence une baisse du pouvoir isolant de la poudre de couverture du fait de sa fusion. C'est pourquoi, de préférence selon l'invention, la teneur en $Fe_2O_3$ est inférieure ou égale à 1,5 %.

Selon une mise en oeuvre préférée de l'invention, la teneur en oxyde de magnésium ou magnésie est inférieure à 3 % et de préférence inférieure ou égale à 2,5 %. La teneur en magnésie est maintenue basse pour plusieurs raisons dont ses faibles capacités d'isolation thermique, l'augmentation de densité qu'elle génèrerait au sein de la couverture et son prix. Il est connu d'employer de la magnésie dans les poudres de couvertures afin d'éviter une usure prématurée des réfractaires. Dans l'invention, le problème lié à la réactivité de la poudre de couverture avec les réfractaires est, comme nous l'avons vu plus haut, géré par une adaptation de l'indice de basicité de ladite couverture.

Exemple de composition d'un produit fini selon l'invention :

| Elément | Teneur pondérale |
|---------|------------------|
| $SiO_2$ | 22,5 % |
| $Al_2O_3$ | 18,1 % |
| $Fe_2O_3$ | 1,4 % |
| CaO totale | 40,8 % |
| $P_2O_5$ | 0,6 % |
| MgO | 2,1 % |
| $K_2O$ | 0,4 % |
| $Na_2O$ | 0,5 % |
| C total | 0,75 % |

Le calcul de l'indice de basicité de la composition selon l'exemple donne le résultat suivant :

$$\frac{CaO + MgO}{SiO_2 + Al_2O_3} = 1,06$$

Le produit est ensuite atomisé pour l'obtention d'un granulé. La mise du produit sous forme de granulés présente plusieurs avantages. D'une part elle permet d'obtenir un produit exempt de poussières ce qui permet de préserver la propreté de l'aciérie et de limiter les problèmes de poussières dans les yeux pour les opérateurs. D'autre part, elle permet une alimentation du répartiteur ou de la poche de manière mécanique. En effet, lorsque la poudre présente une granulométrie trop fine il y a un risque de colmatage des conduits des dispositifs d'alimentation automatique. Les techniques d'atomisation sont bien connues de l'homme du métier et ne seront pas détaillées plus avant. La granulométrie visée dans le cadre de l'invention est par exemple une taille moyenne de grains de 250 μm.

Les tests ont été effectués dans un four permettant de mesurer la conductivité thermique du matériau. La mesure réalisée à 800°C a donné les résultats suivants :

- Cendre de riz standard = 0,060 W/m.K
- Cendre de riz granulée = 0,081 W/m.K
- Poudre de couverture granulée selon l'invention = 0,067 W/m.K

Comme on peut le constater la poudre de couverture selon l'invention présente d'excellentes capacités d'isolation thermique, presque comparables à la poudre de cendre de riz standard. Ce résultat est dû d'une part à l'emploi d'une cendre et d'autre part au choix de l'élément acide ajouté, à savoir l'alumine.

L'invention ne se limite pas aux modes de réalisation décrits ci-avant, donnés seulement à titre d'exemple, mais englobe toutes les variantes que pourra envisager l'homme du métier dans la cadre de la définition qui en a été donnée. En particulier, elle englobe l'utilisation de cendre de bois en tant que matière première pour la fabrication de poudre de couverture pour lingotière de coulée continue d'acier.

**Revendications**

1. Poudre de couverture pour acier liquide **caractérisée en ce que** sa composition chimique, outre les inévitables impuretés résiduelles venant de son élaboration, répond au moins à l'analyse suivante, donnée en teneurs pondérales :

$$15\ \% \leq SiO_2 \leq 30\ \%$$

$$10\ \% \leq Al_2O_3 \leq 25\ \%$$

$$Fe_2O_3 \leq 3\ \%$$

$$30\ \% \leq CaO\ totale \leq 50\ \%$$

$$MgO < 5\ \%$$

$$C < 3\ \%$$

et **en ce qu'**elle présente en outre un indice de basicité compris entre 0,6 et 1,3, ledit indice de basicité étant défini comme le rapport des teneur pondérales :

$$\frac{CaO + MgO}{SiO_2 + Al_2O_3}$$

2. Poudre de couverture selon la revendication 1 **caractérisée en ce qu'**elle est élaborée à base de cendre de bois.

3. Poudre de couverture selon l'une des revendications 1 ou 2 **caractérisée en ce qu'**elle présente un indice de basicité compris entre 0,8 et 1,2, et de préférence entre 0,9 et 1,1.

4. Poudre de couverture selon l'une des revendications 1 à 3 **caractérisée en ce qu'**elle présente une teneur en carbone inférieure à 2 %

5. Poudre de couverture selon l'une des revendications 1 à 4 **caractérisée en ce que** sa teneur en oxyde de magnésium MgO est inférieure à 3 % et de préférence inférieure ou égale à 2,5 %.

6. Poudre de couverture selon l'une des revendications 1 à 4 **caractérisée en ce que** sa teneur en oxyde de fer $Fe_2O_3$ est inférieure ou égale à 1,5 %

7. Poudre de couverture selon l'une des revendications 1 à 6 **caractérisée en ce qu'**elle comprend en outre $P_2O_5 \leq 2,5$ % et/ou $K_2O < 1$ % et/ou $Na_2O < 0,5$ % et/ou $SO_3 < 0,5$ % et/ou $TiO_2 < 1$ %.

8. Poudre de couverture selon la revendication 7 **caractérisée en ce que** la somme des teneurs en oxyde de fer $Fe_2O_3$, en dioxyde de titane $TiO_2$ et en pentoxyde de phosphore $P_2O_5$ est inférieure à 5 %.

9. Procédé de fabrication d'une poudre de couverture pour acier liquide **caractérisé en ce qu'**il comprend les étapes suivantes :

   - on mélange, en teneurs pondérales, de 5 à 20 % d'alumine $Al_2O_3$ à de la cendre de bois ;
   - on ajoute un liant organique ou minéral.

10. Procédé selon la revendication 9 **caractérisé en ce que** la proportion d'alumine mélangée à la cendre de bois est de 8 à 15 %, et de préférence 10 %.

11. Procédé selon l'une des revendications 9 ou 10 **caractérisé en ce que** la composition chimique de la cendre de bois utilisée répond, outre les inévitables impuretés résiduelles venant de son élaboration, au moins à l'analyse suivante, donnée en teneur pondérale :

$$20\ \% \leq SiO_2 \leq 40\ \%$$

$$10\ \% \leq Al_2O_3 \leq 20\ \%$$

$$Fe_2O_3 \leq 3\ \%$$

$$25 \leq CaO\ totale \leq 50\ \%$$

$$MgO \leq 6\ \%$$

$$C < 5\ \%$$

12. Procédé selon l'une des revendications 9 à 11 **caractérisé en ce que** la cendre de bois utilisée présente en outre une teneur en chaux CaO libre inférieure à 5 %

13. Procédé selon l'une des revendications 9 à 12 **caractérisé en ce que** la teneur d'alumine ajoutée est choisie de sorte à obtenir un indice de basicité compris entre 0,6 et 1,3 de préférence compris entre 0,8 et 1,2, et de préférence encore entre 0,9 et 1,1, ledit indice de basicité étant défini comme le rapport des teneurs pondérales :

$$\frac{CaO + MgO}{SiO_2 + Al_2O_3}$$

14. Procédé selon l'une des revendications 9 à 13 **caractérisé en ce que** le mélange obtenu est ensuite atomisé de sorte à obtenir un produit final granulé.

15. Utilisation de cendre de bois comme matière première pour l'élaboration d'une poudre de couverture pour acier liquide.

**Europäisches Patentamt**
**European Patent Office**
**Office européen des brevets**

## RAPPORT DE RECHERCHE EUROPEENNE

Numéro de la demande

EP 10 29 0387

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 112 118 A1 (EST ACIERS FINS) 16 juin 1972 (1972-06-16) * page 1, ligne 1 - ligne 3 * * page 4, ligne 8 - ligne 20 * * page 5, ligne 4 - ligne 35 * * page 8, ligne 19 - ligne 24 * * figure 1; tableaux II, III, IV, V * | 1,6-8 | INV. C21C7/00 C21C7/076 B22D11/111 C04B18/06 |
| X | JP 2001 064714 A (KAWASAKI STEEL CO) 13 mars 2001 (2001-03-13) * abrégé * * Tableau 2, example 7 * | 1,3 | |
| X | JP 2001 347351 A (SUMITOMO METAL IND) 18 décembre 2001 (2001-12-18) * abrégé * * Tableau 2, examples b, d, e * | 1,3,5,7 | |
| X | WO 03/097881 A1 (POPE PETER GEOFFREY [GB]) 27 novembre 2003 (2003-11-27) | 1-4, 6-13,15 | |
| Y | * page 1, ligne 8 - ligne 19 * * page 3, ligne 1 - page 4, ligne 7 * * page 5, ligne 20 - page 6, ligne 2 * * page 7, ligne 19 - page 8, dernière ligne; tableau 1 * | 14 | DOMAINES TECHNIQUES RECHERCHES (IPC) C21C B22D C04B |
| X | JP 59 143011 A (KOBAYASHI CHIAKI) 16 août 1984 (1984-08-16) * abrégé * | 15 | |
| A | | 9 | |
| X | GB 1 212 391 A (OTANI KOKICHI [JP]) 18 novembre 1970 (1970-11-18) * page 1, ligne 40 - ligne 50 * * page 7, ligne 36 - ligne 40 * | 15 | |
| A | | 9 | |

-/--

Le présent rapport a été établi pour toutes les revendications

| Lieu de la recherche | Date d'achèvement de la recherche | Examinateur |
|---|---|---|
| La Haye | 18 novembre 2010 | Ceulemans, Judy |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 10 29 0387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 6 328 781 B1 (DEBIESME BERNARD [FR] ET AL) 11 décembre 2001 (2001-12-11)<br>* colonne 2, ligne 58 - colonne 3, ligne 36 *<br>* colonne 4, ligne 6 - ligne 18 *<br>----- | 14 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 18 novembre 2010 | Ceulemans, Judy |

# EP 2 407 563 A1

**ANNEXE AU RAPPORT DE RECHERCHE EUROPEENNE
RELATIF A LA DEMANDE DE BREVET EUROPEEN NO.**

EP 10 29 0387

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-11-2010

| Document brevet cité au rapport de recherche | | Date de publication | Membre(s) de la famille de brevet(s) | | Date de publication |
|---|---|---|---|---|---|
| FR 2112118 | A1 | 16-06-1972 | AUCUN | | |
| JP 2001064714 | A | 13-03-2001 | JP | 4000724 B2 | 31-10-2007 |
| JP 2001347351 | A | 18-12-2001 | JP | 3610885 B2 | 19-01-2005 |
| WO 03097881 | A1 | 27-11-2003 | AT | 418623 T | 15-01-2009 |
| | | | AU | 2003233896 A1 | 02-12-2003 |
| | | | CA | 2525655 A1 | 27-11-2003 |
| | | | EP | 1532282 A1 | 25-05-2005 |
| | | | ES | 2319756 T3 | 12-05-2009 |
| | | | GB | 2388612 A | 19-11-2003 |
| | | | US | 2005229745 A1 | 20-10-2005 |
| JP 59143011 | A | 16-08-1984 | AUCUN | | |
| GB 1212391 | A | 18-11-1970 | BE | 709558 A | 18-07-1968 |
| | | | BG | 17473 A3 | 10-11-1973 |
| | | | FR | 1594547 A | 08-06-1970 |
| | | | NO | 129614 B | 06-05-1974 |
| | | | SE | 340507 B | 22-11-1971 |
| US 6328781 | B1 | 11-12-2001 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2348261

- US 6174347 B